# EUROPEAN PATENT APPLICATION

(11) **EP 1 453 168 A1**
(43) Date of publication of application: **01.09.2004**
(21) Application number: 03386012.3
(22) Date of filing: 15.05.2003
(51) Int. Cl.: H02G 3/08, H02G 15/04

(54) **Application method of embodied glands in boxes for external and internal connections**

(30) Priority: 26.02.2003 GR 2003100100
(71) Applicant: Palaiohorinos, Ioannis, Vipeth Thessaloniki (GR)
(72) Inventor: Palaiohorinos, Ioannis, Vipeth Thessaloniki (GR)

(57) **Abstract**

This method refers to application of embodied glands with automatic tightening and water tightness of electric cables used in external connection boxes for all types of diameter from No.9, No.11, No.16, No.21 etc. depending on the size of box and its use.

The boxes are manufactured in any geometrical shape (parallelogram, square) in any arrangement of glands. The holes of the glands are covered by waterproof pins (14) for further water tightness of the boxes.

## Description

This method refers to application of embodied glands with automatic tightening and water tightness of electric cables used in external connection boxes for all types of diameter from No.9, No. 11, No. 16, No. 21 etc. depending on the size of box and its use.

Till nowadays in present boxes there are holes with rubber or plastic covers that can be removed for the installment of glands.

With the installment of glands in holes there were always gaps in used nuts.

Moreover, the present boxes of small dimensions do not have bolts on the cover and are only bucked because in different case water will inter the box. The present boxes have problem during their bucking on a metallic construction because with this action a cable could touch he bolts and short circuit will come up.

According to my method the 'ears' at the external side of the box give us the opportunity of a quick screwing without drilling the inner part of box, fact that has many risks for electric shock for the excess of power and short circuit.

Furthermore, we avoid the connections of nuts which caused problems of creation of gaps in screwing (absolute water tightness).

The shapes of boxes can be parallelogram or square and the positions of glands can be installed in any point of the perimeter of box and in any arrangement. Through glands 2 or 3 cables can pass simultaneously.

A practical application is presented in the attached drawings.

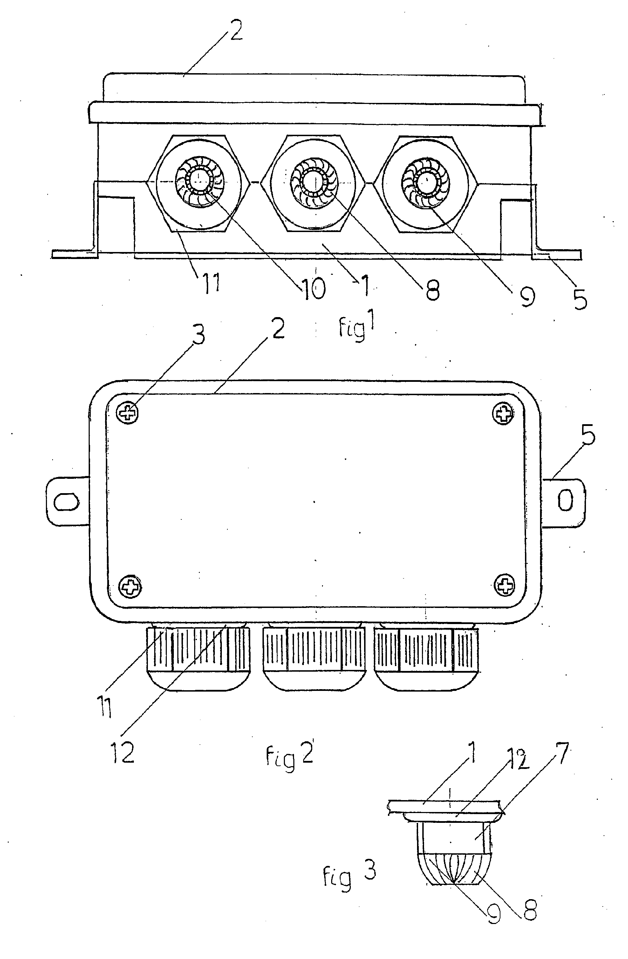

In Figure 1 we see the frontage of waterproof box with 3 glands.

In Figure 2 the top view of 3 glands is presented.

In Figure 3 the top view of embodied gland is noted

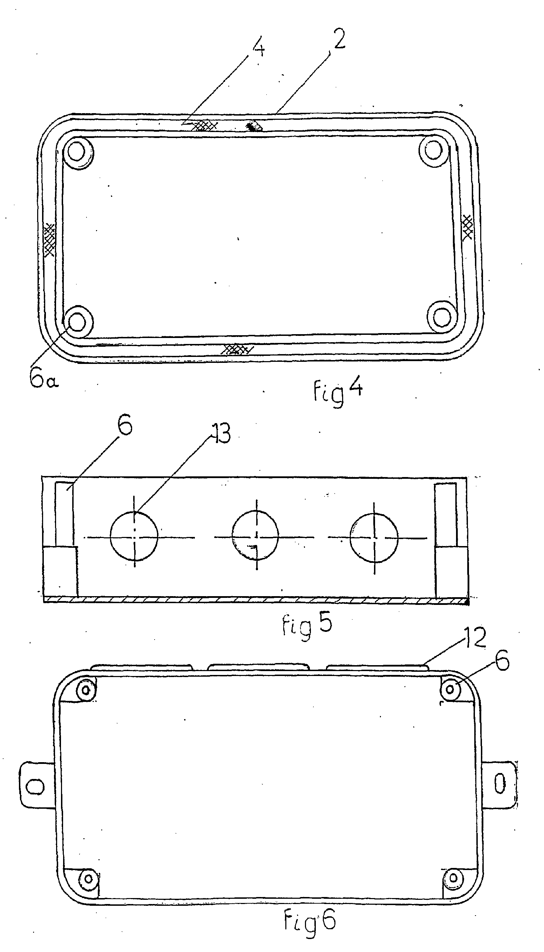

In Figure 4 we see the upper view of box cover.

In Figure 5 the inner form of box is presented.

In Figure 6 we observe top view of inner part of box.

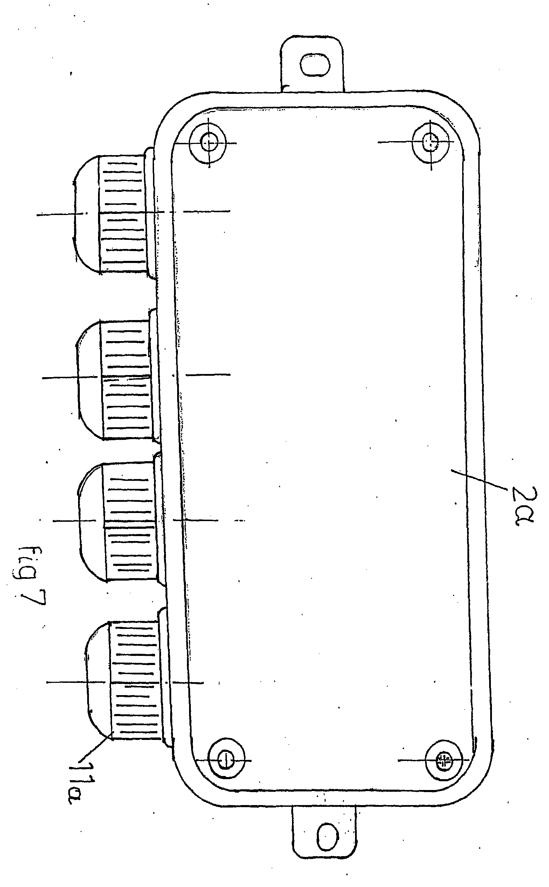

In Figure 7 the top view of box with 4 glands is presented.

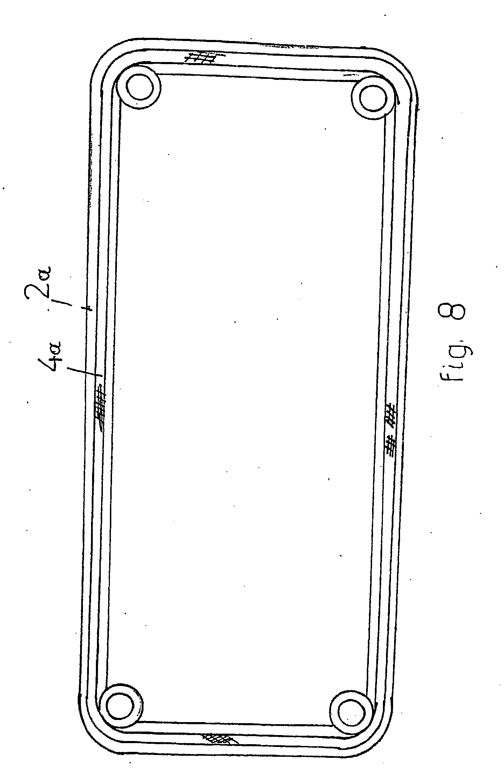

In Figure 8 the upper view of box cover with 4 glands is noted.

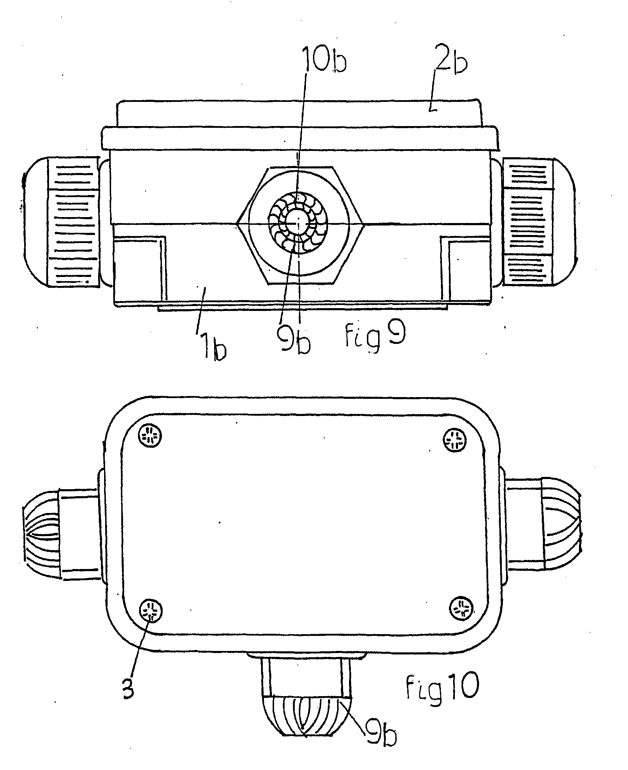

In Figure 9 we see the frontage of box with arrangement of glands in T.

In Figure 10 the top view of box in arrangement of glands is T is noted.

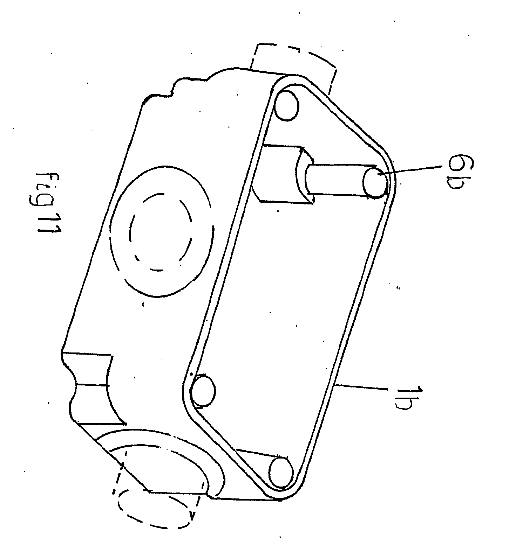

In Figure 11 the perspective of the internal of box in type T is presented.

In Figure 12 we see the frontage of square box in random arrangement of glands.

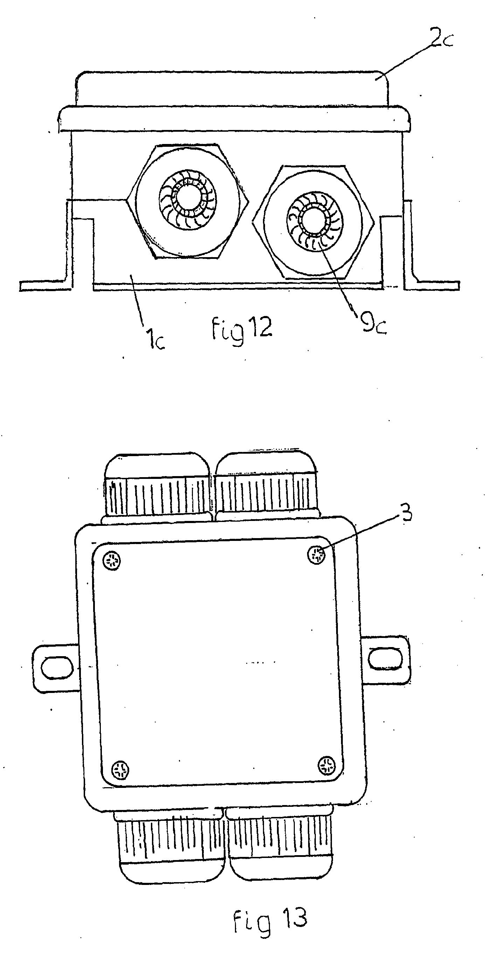

In Figure 13 we observe the top view of a square box.

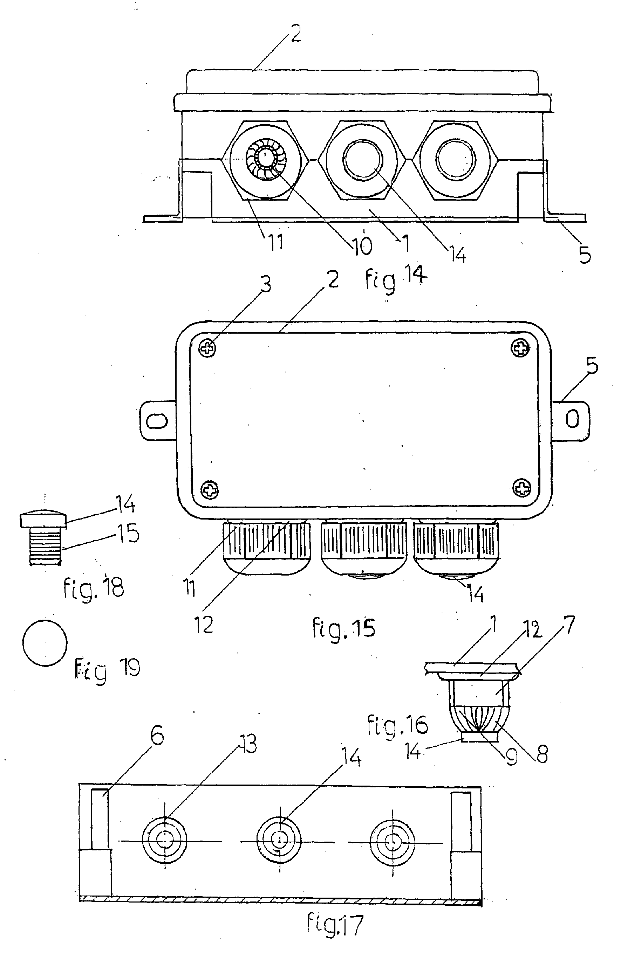

In Figure 14 we see the frontage of an external waterproof box with 3 glands and two waterproof pins on them.

In Figure 15 the top view of the box with 3 glands is presented.

In Figure 16 the top view of the integrated gland with the waterproof pin is noted.

In Figure 17 we see the internal view of the box with the waterproof pin in every hole.

In Figure 18 we see the frontage of waterproof pin.

In Figure 19 the top view of the waterproof pin is presented.

According to figures the application method refers to a connection box with embodied glands (9) (9b) (9c) with nuts (11) in boxes with 3 glands (1) or boxes (1a) with 4 glands or boxes (1b) in arrangement of type T or square boxes (1c). The boxes are insured with covers (2) (2a) (2b) (2c) with nuts (3) which have elastic waterproof flanges peripherally (4) (4a). In external part of box there are stability 'ears' (5) (5a) (5b).

Boxes bear nuts' holders (6) (6a) (6b) and inner holes (13) where cables come through. In glands there are the part of spiral (7), ray ends (8) and the external elastic waterproof washer (10) (10b) and, finally, external form of ring (12) for water tightness enhancement.

In all types of boxes in the holes of the glands waterproof pins are installed for further enhancement of water tightness. The waterproof pin (14) has spiral corrugation (15) for better screwing to the gland. The pin enhances the water tightness in case that we do not use all holes for electricity.

## Claims

1. An application method of embodied glands in boxes for external and internal connections and refers to a connection box with embodied glands (9) (9b) (9c) with nuts (11) in boxes with 3 glands (1) or boxes (1a) with 4 glands or boxes (1b) in arrangement of type T or square boxes (1c). The boxes are insured with covers (2) (2a) (2b) (2c) with nuts (3) which have elastic waterproof flanges peripherally (4) (4a). In external part of box there are stability 'ears' (5) (5a) (5b).
Boxes bear nuts' holders (6) (6a) (6b) and inner holes (13) where cables come through. In glands there are the part of spiral (7), ray ends (8) and the external elastic waterproof washer (10) (10b) and, finally, external form of ring (12) for water tightness enhancement. In all types of boxes in the holes of glands waterproof pins (14) are installed with spiral corrugation (15) for screwing to the gland.
